**Europäisches Patentamt**

**European Patent Office**

**Office européen des brevets**

(19)

(11) Publication number: **0 162 520**
**B1**

(12) # EUROPEAN PATENT SPECIFICATION

(45) Date of publication of patent specification: **03.01.90**

(51) Int. Cl.⁵: **B 01 D 3/20, B 01 D 3/26, B 01 D 53/18**

(21) Application number: **85200765.7**

(22) Date of filing: **14.05.85**

(54) **Gas/liquid contacting column.**

(30) Priority: **24.05.84 GB 8413336**

(43) Date of publication of application:
**27.11.85 Bulletin 85/48**

(45) Publication of the grant of the patent:
**03.01.90 Bulletin 90/01**

(84) Designated Contracting States:
**DE FR GB NL**

(56) References cited:
**EP-A-0 092 262**
**BE-A- 561 203**
**DD-A- 104 717**
**DE-A-1 519 693**
**DE-A-2 142 805**
**DE-C- 509 927**
**DE-C- 633 433**
**FR-A-1 534 025**
**US-A-2 010 010**
**US-A-4 171 333**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Bentham, Jeremy Birkett**
**Carel van Bylandtlaan 30**
**NL-2596 HR The Hague (NL)**

(74) Representative: **Aalbers, Onno et al**
**P.O. Box 302**
**NL-2501 CH The Hague (NL)**

## Description

The present invention relates to a gas/liquid contacting column for the exchange of matter between a gas phase and a liquid phase and more in particular to a column in which gas and liquid are caused to flow countercurrently.

German patent No. 633 433 discloses a vertical column for contacting a liquid with a gas, containing a plurality of vertically spaced gas/liquid guiding units, each extending over a cross-section of the column and each comprising a plurality of parallel alternating gas- and liquid passages which extend in horizontal direction, each gas passage being vertically aligned with a liquid passage of the next higher guiding unit, wherein each liquid passage has an open upper end and is formed by side walls, and wherein each gas passage has an open lower end and is formed by side walls.

During normal operation of the known column gas is caused to flow upwardly through the column and liquid is caused to flow downwardly through the column. Gas flows upwardly through the gas passages of the first gas/liquid guiding unit, and liquid flows downwardly through the liquid passages of the second gas/liquid guiding unit arranged above the first one. As each gas passage of the first gas/liquid guiding unit is vertically aligned with a liquid passage of the second gas/liquid guiding unit, the rising gas will contact the descending liquid, and matter is exchanged between gas and liquid.

It is an object of the present invention to provide an improved column for contacting a liquid with a gas which yields during normal operation less liquid entrainment with the gas and a more stable operation.

To this end the vertical column for contacting a liquid with a gas according to the present invention is characterized in that each liquid passage is provided with a bottom wall and with liquid discharge openings at or near said bottom wall, and in that each gas passage terminates at its upper end in a plurality of substantially horizontally directed constricted gas outlets extending in two directions, each gas outlet communicating with the gas passage.

During operation of this column gas and liquid are caused to flow countercurrently through the column, gas coming from below through a gas passage flows through the gas outlets which causes an abrupt increase of the gas velocity. A plurality of substantially horizontal high velocity gas streams leave the gas outlets and impinge against the liquid curtains from the liquid discharge openings of the liquid passage above. The liquid curtains are substantially perpendicular to the gas streams and they are predispersed by impingement on the gas outlets and are further dispersed by and intensively mixed with the high velocity gas streams. Since the gas is substantially horizontally directed upon contact with the liquid, the risk of entrainment of liquid by the gas is small as the gas gives the liquid mainly a horizontal velocity component. Moreover the gas velocity upon contact is substantially reduced. Liquid, if any, entrained with the gas entering the next higher gas passage can separate from the upwardly moving gas by gravity because the gas velocity is relatively low in the gas passage. After the gas/liquid contact, the liquid will flow in downward direction to the liquid passages and accumulates in the lower part of the passages prior to being discharged via the liquid discharge openings to a next lower contact stage. The accumulated liquid prevents gas from flowing upwardly through the liquid passages.

It should be noted that from the liquid discharge openings of a liquid passage the liquid splashes on the horizontally directed constricted gas oulets and is divided approximately into two equal quantities that traverse the gas streams emanating from the gas outlets that extend in two directions. Subsequently these two equal quantities of liquid accumulate in the liquid passages of the guiding unit at either side of the gas passage.

Liquid and/or gas passages adjacent the column wall could be halved, the column's wall deflecting both gas and liquid.

According to a preferred embodiment of the invention the guiding units extend horizontally and the passages extend straight from wall to wall over the column. Although the guiding unit could be inclined or otherwise be not horizontal, every single liquid passage extending horizontally but not at the same level in the column, the totally horizontally construction of the guiding unit is preferred because it takes less space and is from a constructive point of view simple. The passages in a guiding unit could alternatively be circular and concentric with the column wall.

Much preferred is the construction in which the gas passages converge in upward direction. To save space and to fill up the whole column's cross-section with passages the liquid passages are preferably convergent in a downward direction. Adjacent gas and liquid passages can at least partly be bounded by a common inclined side wall. An advantage of upwardly converging gas passages is that the gas velocity increases in the direction of the gas outlets.

Preferably, the constricted gas outlets of a gas passage are formed by parallel walls that extend horizontally and have a width that is larger for each lower parallel wall. The liquid from the liquid discharge openings of the liquid passage above may thus hit the uppermost parallel wall and further will be gradually mixed with gas streams emanating from the staggered gas outlets.

In order to prevent that gas streams emanating from gas outlets from adjacent gas passages that face each other influence each other a vertical baffle may be present between the gas outlets of adjacent gas passages.

The invention will now be illustrated with reference to the accompanying drawings, in which

Figure 1 is a vertical sectional view of an intermediate part of a gas/liquid contacting column provided with gas/liquid guiding units according to one embodiment of the invention

Figure 2 is a transverse section taken along line II—II of Figure 1; and

Figure 3 shows an isometric view of the guiding units shown in Figure 1.

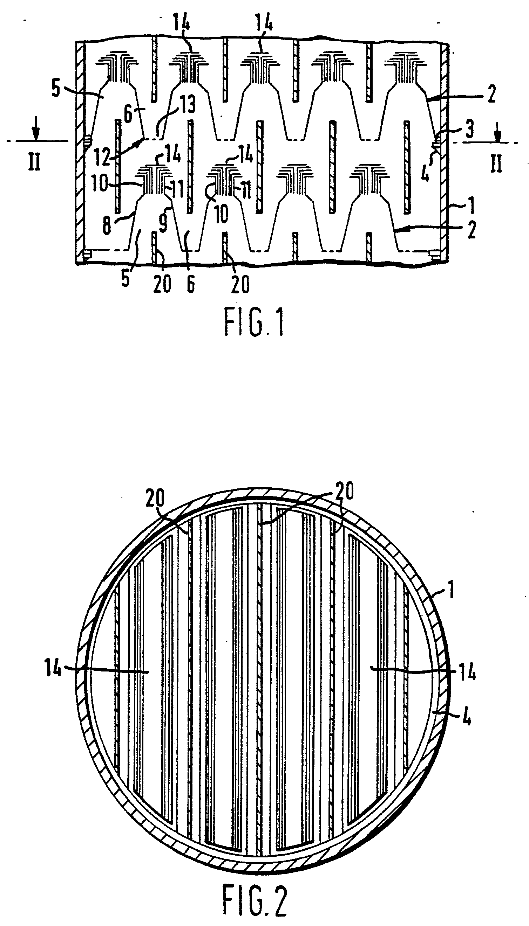

In Figure 1 an intermediate part of a vertically arranged column 1 of circular cross section is shown, which column is provided at its top and bottom with inlets and outlets (not shown) for liquid and gas, as appropriate.

The interior of the column 1 is provided with a plurality of horizontal gas/liquid guiding units 2 arranged one above the other at suitable intervals and extending over substantially the whole cross-section of the column. The outer periphery of said guiding units is provided with a ring 3 mounted on a support ring 4 connected to the inner surface of the sidewall of column 1. The guiding units 2 each consist of a plurality of alternating elongated upwardly converging gas passages 5 and downwardly converging liquid passages 6. The gas passages 5 and liquid passages 6 are laterally bounded by common inclined sidewalls 8 and 9 and common substantially vertical sidewalls 10 and 11, connected to sidewalls 8 and 9, respectively. The vertically spaced guiding units 2 are so positioned with respect to one another that in vertical direction the gas passages are each aligned with a liquid passage of a next higher unit. The liquid passages 6 are bounded at their lower ends by horizontal bottom walls 12 provided with slit-shaped liquid discharge openings 13 running along the length of said bottom walls 12. The openings 13 are so dimensioned that during operation of the column a liquid layer is formed on the walls 12 preventing the entry of gas through said openings 13 in upward direction. The gas passages 5 are bounded in upward direction by substantially horizontal top walls 14 being vertically aligned with the bottom walls 12 of next upper liquid passages 6. The width of the top walls 14 substantially corresponds with the width of the bottom walls 12. The distance between the top walls 14 and the bottom walls 12 should be chosen sufficiently large to prevent hindrance of the outflow of liquid through the liquid discharge openings 13 during operation of the column.

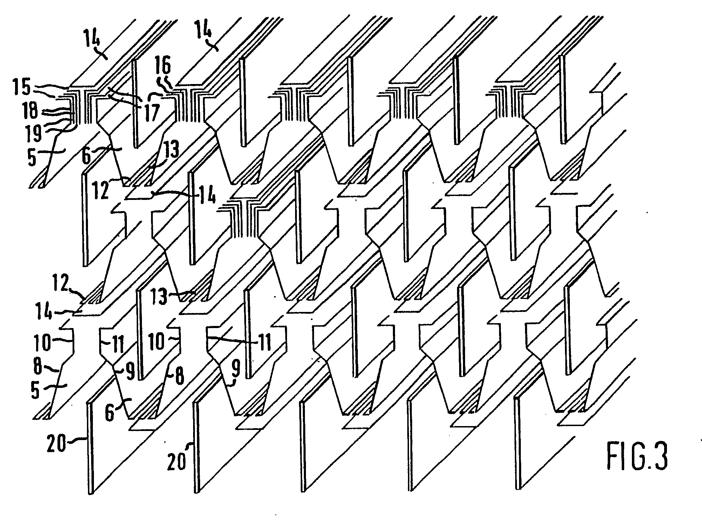

The gas passages 5 are provided with a plurality of constricted gas outlets 15 arranged above one another (see Fig. 3). These gas outlets are formed by substantially horizontal walls 16 having such a width that the outer ends 17 of the gas outlets 15 are arranged in an imaginary plane inclined with respect to the vertical so that the outer ends of lower gas outlets 15 are positioned more laterally outwardly than the outer ends of higher gas outlets. To ensure a substantially flat velocity pattern of the gas flow through each of the outlets 15, the upper constricted parts of the gas passages 5 bounded by the vertically extending walls 10 and 11 are split up into a plurality of outlet passages 18 (see Fig. 3) by vertical parallel walls 19, each outlet passage forming a fluid communication between the passage 5 and one gas outlet 15. The guiding units are further provided with vertically extending splashing baffles 20 that are centrally arranged between opposite gas oulets 15 of adjacent gas passages 5.

The operation of the apparatus shown in the figures is as follows. Liquid collected in the lower parts of a liquid passage 6 leaves this passages 6 through the liquid discharge openings 13 in the form of a plurality of liquid curtains. The liquid curtains impinge on the outer ends of the walls 14 and 16 forming the gas outlets 15, of a gas passage 5 of the next lower unit, thereby causing a breakdown of the liquid curtains into separate droplets with a large total surface area. The flow of gas from the gas passage 5 is split up into a plurality of high velocity streams which pass through the gas outlets 15. These high velocity gas streams leaving the gas outlets 15 in two substantially horizontal directions cause an intensive mixing with the liquid droplets passing along the gas outlets 15. Since the gas streams from the gas outlets 15 are directed horizontally the velocity of the gas may be very high without risk of liquid entrainment as compared to contact of liquid with vertically outflowing gas. The higher the gas velocity may be chosen the more intimate mixing of liquid and gas would be possible. The mixing intensity is of paramount importance for the mass transfer efficiency between the gas and liquid phase. Since the impingment of the liquid against the horizontal walls 16 already caused dispersion of the liquid, the momentum of the outflowing gas is most advantageously used for mixing with the liquid droplets formed after impingement of the liquid on the walls 16. After the gas/liquid contact the gas flows in upward direction to the two gas passages at either side of the liquid passage from which the liquid that contacted the gas originated. On account of the relatively wide entry of said gas passages, the gas velocity is considerably reduced, so that liquid droplets in the gas flow may easily separate therefrom by gravity flow. The splashing baffles 20 form a further aid for liquid separation, viz. the impingement of the gas/liquid mixture upon said baffles 20 causes a sudden velocity reduction of the liquid particles, so that the liquid will form a film along the baffles and will flow towards the liquid passage below.

In the shown embodiment the liquid passages and the gas passages are of substantially equal size. It should however be noted that the size of the liquid and gas passages may be largely varied and adapted to the desired gas and liquid load. The effective contact are for gas and liquid is formed by the space in front of the gas outlets of the gas passages. Since the space is also meant for entry of liquid into the liquid passages, the available space should preferably be chosen rather large. As already discussed in the above a wide entry of the gas passages is convenient for maintaining the gas velocity at a level at which the risk of liquid entrainment is substantially negligible. On the other hand the lower ends of

the liquid passages should preferably be chosen relatively small to provide a sufficient liquid seal against flow of gas at low liquid load operations through the liquid passages.

It should further be noted that instead of elongated liquid discharge openings running along the length of the liquid passages, transversely arranged liquid discharge openings may be chosen. Transverse liquid discharge openings may be preferred from the point of view of generating a proper liquid seal of said openings during operation. Further, such transversely arranged liquid discharge openings may be preferred if the width of the bottom walls of the liquid passages and that of the top walls of the gas passages is relatively small.

**Claims**

1. Column for contacting a liquid with a gas, containing when in vertical position a plurality of vertically spaced gas/liquid guiding units, each extending over a cross-section of the column and each comprising a plurality of parallel alternating gas- and liquid passages which extend in horizontal direction, each gas passage being vertically aligned with a liquid passage of the next higher guiding unit, wherein each liquid passage has an open upper end and is formed by side walls, and wherein each gas passage has an open lower end and is formed by side walls, characterized in that each liquid passage is provided with a bottom wall and with liquid discharge openings at or near said bottom wall, and in that each gas passage terminates at its upper end in a plurality of substantially horizontally directed constricted gas outlets extending in two directions, each gas outlet communicating with the gas passage.

2. Column as claimed in Claim 1, in which the guiding units extend horizontally and the passages extend straight from wall to wall over the column.

3. Column as claimed in Claim 1 or 2, in which the gas passages converge in upward direction and the liquid passages converge in downward direction.

4. Column as claimed in Claim 1, 2 or 3, in which parallel walls form the constricted gas outlets of a gas passage, which walls extend horizontally and have a width that is larger for each lower parallel wall.

5. A column as claimed in any of Claims 1—4, in which adjacent gas and liquid passages are at least partly bounded by a common inclined side wall.

6. Column as claimed in any of Claims 1—5, in which a vertical baffle is present between the gas outlets of adjacent gas passages.

**Patentansprüche**

1. Kolonne zum Inkontaktbringen einer Flüssigkeit mit einem Gas, welche, wenn in vertikaler Stellung, eine Vielzahl von gas/flüssigkeitsleitenden Einheiten in vertikalem Abstand enthält, wobei sich jede über einen Querschnitt der Kolonne erstreckt und jede eine Vielzahl von parallelen alternierenden Gas- und Flüssigkeitspassagen aufweist, die sich in horizontaler Richtung erstrecken, wobei jede Gaspassage vertikal an eine Flüssigkeitspassage der nächsthöheren Führungseinheit angereiht ist, worin jede Flüssigkeitspassage ein offenes oberes Ende aufweist und von Seitenwänden gebildet wird und worin jede Gaspassage ein offenes unteres Ende aufweist und von Seitenwänden gebildet wird, dadurch gekennzeichnet, daß jede Flüssigkeitspassage mit einem Boden und mit Flüssigkeitsabgabeöffnungen im oder in der Nähe des Bodens versehen ist und daß jede Gaspassage an ihrem oberen Ende in einer Vielzahl von im wesentlichen horizontal ausgerichteten und sich verengenden Gasauslässen, die sich in zwei Richtungen erstrecken, endet, wobei jeder Gasauslaß mit der Gaspassage kommuniziert.

2. Kolonne, wie in Anspruch 1 beansprucht, worin die Führungseinheiten sich horizontal erstrecken und die Passagen sich gerade von Wand zu Wand durch die Kolonne erstrecken.

3. Kolonne, wie in Anspruch 1 oder 2 beansprucht, worin die Gaspassagen in Aufwärtsrichtung zusammenlaufen und die Flüssigkeitspassagen in Abwärtsrichtung zusammenlaufen.

4. Kolonne, wie in Anspruch 1, 2 oder 3 beansprucht, worin parallele Wände die sich verengenden Gasauslässe einer Gaspassage bilden, welche Wände sich horizontal erstrecken und eine Weite haben, die größer wird für jede unterhalb gelegene parallele Wand.

5. Kolonne, wie in einem der Ansprüche 1 bis 4 beansprucht, worin aneinandergrenzende Gasund Flüssigkeitspassagen wenigstens teilweise von einer gemeinsamen geneigten Seitenwand begrenzt werden.

6. Kolonne, wie in einem der Ansprüche 1 bis 5 beansprucht, worin ein vertikales Leitblech zwischen den Gasauslässen und den angrenzenden Gaspassagen vorhanden ist.

**Revendications**

1. Colonne de contact d'un liquide avec un gaz contenant, dans une position verticale, un grand nombre d'unités de guidage gaz/liquide espacées verticalement, s'étendant chacune sur une section transversale de la colonne et comprenant chacune un grand nombre de passages parallèles alternatifs de gaz et de liquide qui se développent dans la direction horizontale, chaque passage du gaz étant aligné verticalement avec un passage du liquide de l'unité de guidage immédiatement supérieure, où chaque passage du liquide possède une extrémité supérieure ouverte et est formé par des parois latérales et où chaque passage du gaz possède une extrémité inférieure ouverte et est formé par des parois latérales, caractérisée en ce que chaque passage du liquide comprend une paroi de fond et des orifices d'évacuation du liquide au niveau de ladite paroi de fond ou à proximité de celle-ci, et en ce que chaque passage du gaz se termine à son extrémité supérieure en un grand nombre d'orifices de sortie du gaz, resserrés, dirigés pratiquement horizontalement, se développant dans deux directions, chaque orifice de sortie du gaz communiquant avec le passage du gaz.

2. Colonne selon la revendication 1, dans laquelle les unités de guidage se développent horizontalement et les passages se développent de manière rectiligne de paroi à paroi sur toute la colonne.

3. Colonne selon la revendication 1 ou 2, dans laquelle les passages du gaz convergent dans la direction ascendante et les passages du liquide convergent dans la direction descendante.

4. Colonne selon l'une quelconque des revendications 1, 2 ou 3, dans laquelle des parois parallèles forment les orifices resserrés de sortie du gaz d'un passage du gaz, ces parois s'étendant horizontalement et ayant une largeur qui est plus importante pour chaque paroi parallèle inférieure.

5. Colonne selon l'une quelconque des revendications 1 à 4, dans laquelle les passages du gaz et du liquide, immédiatement voisins, sont au moins partiellement liés par une paroi latérale commune inclinée.

6. Colonne selon l'une quelconque des revendications 1 à 5, dans laquelle une chicane verticale est présente entre les orifices de sortie du gaz de passages de gaz immédiatement voisins.

FIG.1

FIG.2

1

FIG.3